# EUROPÄISCHE PATENTSCHRIFT

(11) **EP 0 745 720 B1**
(45) Veröffentlichungstag und Bekanntmachung des Hinweises auf die Patenterteilung: **26.03.2003**
(21) Anmeldenummer: 96810296.2
(22) Anmeldetag: 09.05.1996
(51) Int. Cl.: D06P 1/642, D06P 1/60, D06P 3/14, D06P 1/607, D06P 1/613, D06P 1/649, D06P 1/651, D06P 1/90

(54) **Die Verwendung von Hilfsmittelzubereitungen beim Färben von Wolle**
Use of preparations of auxiliary agents for dyeing wool
Utilisation des préparations d'agents auxiliaires pour la teinture de la laine

(30) Priorität: 18.05.1995 CH 147895
(43) Veröffentlichungstag der Anmeldung: 04.12.1996
(73) Patentinhaber: Ciba Specialty Chemicals Holding Inc., 4057 Basel (CH)
(72) Erfinder: Binz, Jörg, 4147 Aesch (CH); Saladin, Bruno, 4202 Duggingen (CH); Jöllenbeck, Martin, Dr., 79379 Müllheim (DE)

(56) Entgegenhaltungen:
- DE-A- 1 619 530
- DE-A- 2 802 304
- DE-A- 4 324 152
- US-A- 3 914 185

## Beschreibung

Die vorliegende Erfindung betrifft neue Hilfsmittelzubereitungen enthaltend mindestens ein Aminoxid, mindestens ein Fettalkohol- und/oder ein Fettsäureamidglykoläther und ein organisches Lösungsmittel, und ihre Verwendung als Hilfsmittel beim Färben von Wolle.

Die Verwendung von Aminoxiden in Gegenwart von Fettalkoholethoxilaten beim Färben von Wolle ist z.B. aus der DE-A-1 619 530 bekannt. Die Handhabung, sowie die Einarbeitung dieser Hilfsmittel in ein Färbebad entspricht aber nicht allen heutigen Anforderungen. Es besteht daher ein Bedürfnis nach einer fertigen Zubereitung, welche stabil ist und derer Zugabe zum Färbebad sich mit einfachen Mitteln durchführen lässt. Die Aufgabe dieser Erfindung war, solche Zubereitungen bereitzustellen.

Es wurde nun überraschenderweise gefunden, das man mit den erfindungsgemässen Zubereitungen diese Aufgabe lösen kann.

Gegenstand der vorliegenden Erfindung ist somit die Verwendung von Hilfsmittelzubereitungen enthaltend
als Komponente (a) mindestens ein Aminoxid der Formel 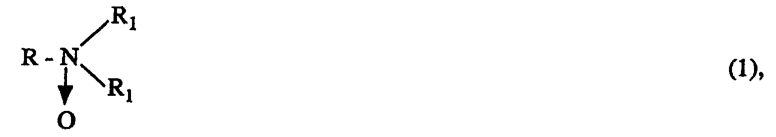 worin R einen aliphatischen Rest mit 8 bis 24 Kohlenstoffatomen und R₁ einen unsubstituierten oder durch Hydroxy substituierten aliphatischen Rest mit 1 bis 24 Kohlenstoffatomen, bevorzugt 1 bis 6 Kohlenstoffatomen, bedeuten, als Komponente (b) mindestens eine Verbindung der Formel

R₂-U-(R₃-O)ₘ-W (2),

worin R₂ ein aliphatischer Rest von 8 bis 24 Kohlenstoffatomen,
R₃ Alkylen mit 2 bis 4 Kohlenstoffatomen,
U -O- oder 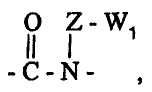 worin Z eine direkte Bindung, (R₃-O)ᵣ oder C₁-C₆-Alkylen und W₁ Wasserstoff, unsubstituiertes oder mit Hydroxy, Carboxy, Isocyanato, Phenyl, Benzyloxymethylen oder Phenethyloxymethylen substituiertes C₁-C₆-Alkyl ist,
m und r voneinander unabhängig eine Zahl von 2 bis 25 ist, (R₃- O)ₘ für m gleiche oder verschiedene Reste (R₃- O) und (R₃- O)ᵣ für r gleiche oder verschiedene Reste (R₃- O) steht, und W Wasserstoff, unsubstituiertes oder mit Hydroxy, Carboxy, Isocyanato, Phenyl, Benzyloxymethylen oder Phenethyloxymethylen substituiertes C₁-C₆-Alkyl ist, und als Komponente (c) 10-30 Gewichtsteile, berechnet auf 100 Gewichtsteile der fertigen Zubereitung, eines organisches Lösungsmittels aus der Gruppe einwertige und zweiwertige aliphatische C₁-C₆-Alkohole, Alkylenglykole, Monoalkyläther von Glykolen, Ketone, Aether und Acetate, Tetrahydrofurfurylalkohol, Pyridin, Acetonitril, γ-Butyrolacton, N,N-Dimethylformamid, N,N-Dimethylacetamid, Tetramethylharnstoff, Tetramethylensulfon, 2,2,4-Trimethyl-1,3-pentandiol-di-isobutyrat und Dimethylmethanphosphonat, als Hilfsmittel beim Färben von Wolle.

R und R₂ als aliphatischer Rest mit 8 bis 24 Kohlenstoffatomen sind z.B. ein C₈-C₂₄-Alkyl oder C₈-C₂₄-Alkenyl wie Octyl, Nonyl, Decyl, Undecyl, Dodecyl, Tridecyl, Tetradecyl, Pentadecyl, Hexadecyl, Heptadecyl, Octadecyl, Tetradecenyl, Hexadecenyl, Octadecenyl, oder natürliche Gemische enthaltend mehrere verschiedene Alkyl- oder Alkenylreste wie Talgfett (C₁₂ bis C₁₈) oder Kokosfett (C₈ bis C₁₈).
Bevorzugt enthalten die aliphatischen Reste R und R₂ 12 Kohlenstoffatome (Lauryl), 14 Kohlenstoffatome (Myristyl), 16 Kohlenstoffatome (Cetyl) oder 18 Kohlenstoffatome (Oleyl, Stearyl) oder Gemische von 8 bis 18 Kohlenstoffatomen (Kokosfett) oder 12 bis 18 Kohlenstoffatomen (Talgfett).

R₁ als aliphatischer Rest mit 1 bis 24 Kohlenstoffatomen ist z.B. Methyl, Ethyl, n-Propyl, Isopropyl n-Butyl, Isobutyl, sek.Butyl, tert.Butyl oder Hydroxyethyl. Bevorzugt sind Methyl und Hydroxyethyl.

R₃ als Alkylen mit 2 bis 4 Kohlenstoffatomen ist z.B. Propylen, Butylen oder vorzugsweise Ethylen.

Geeignete Aminoxide als Komponente (a) sind beispielsweise folgende Verbindungen: N,N-Dimethyl-N-dodecylaminoxid, N,N-Dimethyl-N-hexadecylaminoxid, N,N-Dimethyl-N-octadecenylaminoxid, N,N-Dibutyl-N-dodecylaminoxid, N,N-bis-(β-hydroxyäthyl)-N-stearylaminoxid, N,N-Dimethyl-N-oleylaminoxid, N,N-Dimethyl-N-myristylaminoxid, N,N-Dimethyl-N-laurylaminoxid, N,N-bis-(β-hydroxyäthyl)-N-talgfettaminoxid, N,N-bis-(β-hydroxyäthyl)-N-kokosfettaminoxid, N,N-bis-(β-hydroxyäthyl)-N-oleylaminoxid.

Bevorzugt sind N,N-bis-(β-hydroxyäthyl)-N-oleylaminoxid, N,N-Dimethyl-N-myristylaminoxid, N,N-Dimethyl-N-laurylaminoxid, N,N-bis-(β-hydroxyäthyl)-N-talgfettaminoxid und N,N-bis-(β-hydroxyäthyl)-N-kokosfettaminoxid.

Besonders bevorzugt sind N,N-Dimethyl-N-myristylaminoxid und N,N-bis-(β-hydroxyäthyl)-N-talgfettaminoxid.

Bei den Verbindungen der Komponente (b) handelt es sich insbesondere um Fettalkoholglykoläther der Formel

R₄-O-(R₃-O)ₘ-W (2a),

worin R₄ ein aliphatischer Rest von 8 bis 24 Kohlenstoffatomen, insbesondere 8 bis 18 Kohlenstoffatomen,
R₃ Alkylen mit 2 bis 4 Kohlenstoffatomen, W Wasserstoff, unsubstituiertes oder mit Hydroxy, Carboxy, Isocyanato, Phenyl, Benzyloxymethylen oder Phenethyloxymethylen substituiertes C₁-C₆-Alkyl ist, m eine Zahl von 2 bis 25 ist und (R₃- O)ₘ für m gleiche oder verschiedene Reste (R₃- O) steht.

R₄ als aliphatischer Rest mit 8 bis 24 Kohlenstoffatomen kann geradkettig oder verzweigt sein. Vorzugsweise bedeutet R₄ Alkyl oder Alkenyl mit 8 bis 22 und insbesondere mit 8 bis 18 Kohlenstoffatomen.
Die aliphatischen Reste können einzeln oder in Form von Gemischen von zwei oder mehreren Komponenten vorhanden sein, wie z.B. Mischungen von Alkyl- und/oder Alkenylgruppen.

Als aliphatische Alkylreste mit 8 bis 18 Kohlenstoffatomen kommen z.B. Octyl, Decyl, Undecyl, Dodecyl (Lauryl), Tetradecyl (Myristyl), Hexadecyl (Cetyl), Octadecyl (Stearyl), 5-Methylheptyl, 2-Ethyl-hexyl, 1,1,3,3-Tetramethylbutyl, Isononyl, Trimethylhexyl, Trimethylnonyl, Trimethyldecyl, oder Gemische von linearen primären Alkylresten mit 8 bis 18 Kohlenstoffatomen, wie C₈-C₁₀-Alkyl, C₉-C₁₁-Alkyl, C₁₀-C₁₄-Alkyl, C₁₂-C₁₃-Alkyl oder C₁₆-C₁₈-Alkyl in Betracht.
Als aliphatische Alkenylreste sind beispielsweise Dodecenyl, Hexadecenyl oder Octadecenyl (Oleyl) zu nennen.

m ist vorzugsweise eine Zahl von 4 bis 15. Besonders bevorzugt ist m eine Zahl von 8 bis 10.

Die Verbindungen der Formel (2a) sind beispielsweise aus der EP-A-0 312 493 bekannt.

Bei den Verbindungen der Komponente (b) handelt es sich weiterhin um Fettsäureamidglykoläther der Formel 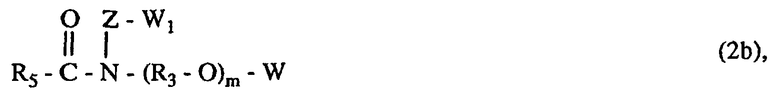 worin R₃ Alkylen mit 2 bis 4 Kohlenstoffatomen,
R₅ ein aliphatischer Rest von 8 bis 24 Kohlenstoffatomen, insbesondere 8 bis 18 Kohlenstoffatomen,
W und W₁ unabhängig voneinander Wasserstoff, unsubstituiertes oder mit Hydroxy, Carboxy, Isocyanato, Phenyl, Benzyloxymethylen oder Phenethyloxymethylen substituiertes C₁-C₆-Alkyl ist, Z eine direkte Bindung, (R₃-O)ᵣ oder C₁-C₆-Alkylen,
m und r voneinander unabhängig eine Zahl von 2 bis 25 ist, (R₃- O)ₘ für m gleiche oder verschiedene Reste (R₃- O) und (R₃- O)ᵣ für r gleiche oder verschiedene Reste (R₃- O) steht.

R₅ als aliphatischer Rest mit 8 bis 24 Kohlenstoffatomen kann geradkettig oder verzweigt sein. Vorzugsweise bedeutet R₅ Alkyl oder Alkenyl mit 8 bis 22 und insbesondere mit 8 bis 18 Kohlenstoffatomen.
Die aliphatischen Reste können einzeln oder in Form von Gemischen von zwei oder mehreren Komponenten vorhanden sein, wie z.B. Mischungen von Alkyl- und/oder Alkenylgruppen.
Als aliphatische Alkylreste mit 8 bis 24 Kohlenstoffatomen kommen z.B. Octyl, Decyl, Dodecyl (Lauryl), Tetradecyl (Myristyl), Hexadecyl (Palmityl), Octadecyl (Stearyl), Eicosanyl (Arachinyl) und Docosanyl (Behenyl), 5-Methylheptyl, 2-Ethylhexyl, 1,1,3,3-Tetramethylbutyl, Isononyl, Trimethylhexyl, Trimethylnonyl, Trimethyldecyl oder Gemische von linearen primären Alkylresten mit 8 bis 18 Kohlenstoffatomen, wie C₈-C₁₀-Alkyl, C₉-C₁₁-Alkyl, C₁₀-C₁₄-Alkyl, C₁₂-C₁₃-Alkyl oder C₁₆-C₁₈-Alkyl in Betracht.
Als aliphatische Alkenylreste sind beispielsweise Dodecenyl, Tetradecenyl, Hexadecenyl, Octadecenyl (Oleyl) oder 9,12-Octadienyl zu nennen.

Als Komponente (c) werden vorzugsweise Methanol, Ethanol, Propanol, Isopropanol, Butanol, Isobutanol, 1,3-Butandiol, 1,2-Pentandiol, 2-Methyl-2,4-pentandiol, Ethylenglykol, Propylenglykol, Dipropylenglykol, Ethylenglykolmonomethyläther, Ethylenglykolmonoethyläther, Ethylenglykolmonobutyläther, Diethylenglykolmonomethyläther, Diethylenglykolmonoethyläther, Diethylenglykolmonobutyläther, Tetraethylenglykolmonobutyläther, γ-Butyrolacton oder Tetramethylharnstoff verwendet.

Die erfindungsgemässen Zubereitungen enthalten 10 bis 30 Gewichtsteile, berechnet auf 100 Gewichtsteile der fertigen Zubereitung, der Komponente (c).

Zusätzlich kann die erfindungsgemässe Hilfsmittelzubereitung als Komponente (d) Wasser enthalten.

Bevorzugt sind Hilfsmittelzubereitungen welche als Komponente (a) N,N-bis-(β-hydroxyäthyl)-N-oleylaminoxid, N,N-Dimethyl-N-myristylaminoxid, N,N-Dimethyl-N-laurylaminoxid, N,N-bis-(ß-hydroxyäthyl)-N-talgfettaminoxid und N,N-bis-(β-hydroxyäthyl)-N-kokosfettaminoxid,
als Komponente (b) ein Fettalkoholglykoläther der Formel

C₁₈H₃₅-O-(CH₂-CH₂-O)₂₋₂₅H (3a),

C₁₈H₃₇-O-(CH₂-CH₂-O)₂₋₂₅H (3b)

oder ein Gemisch der Fettalkoholglykoläther der Formeln

C₁₆H₃₃-O-(CH₂-CH₂-O)₂₋₂₅H (3c)

und

C₁₈H₃₇-O-(CH₂-CH₂-O)₂₋₂₅H (3b)

oder ein Kokosfettalkoholglykoläther mit 2 bis 25 angelagerten Ethylenoxideinheiten oder ein Talgfettalkoholglykoläther mit 2 bis 25 angelagerten Ethylenoxideinheiten,
und als Komponente (c) ein Alkylenglykol oder einen aliphatischen ein- oder zweiwertigen C₁-C₆-Alkohol enthalten.

Ebenfalls bevorzugt sind Hilfsmittelzubereitungen welche als Komponente (a) N,N-bis-(β-hydroxyäthyl)-N-oleylaminoxid, N,N-Dimethyl-N-myristylaminoxid, N,N-Dimethyl-N-laurylaminoxid, N,N-bis-(β-hydroxyäthyl)-N-talgfettaminoxid und N,N-bis-(β-hydroxyäthyl)-N-kokosfettaminoxid,
als Komponente (b) Kokosfettsäure-mono-ethanolamidethoxilat mit 2 bis 25 angelagerten Ethylenoxideinheiten, Kokosfettsäure-di-ethanolamidethoxilat mit 2 bis 25 angelagerten Ethylenoxideinheiten, Talgfettsäure-mono-ethanolamidethoxilat mit 2 bis 25 angelagerten Ethylenoxideinheiten, Talgfettsäure-di-ethanolamidethoxilat mit 2 bis 25 angelagerten Ethylenoxideinheiten, Oelsäure-mono-ethanolamidethoxilat mit 2 bis 25 angelagerten Ethylenoxideinheiten oder Oelsäure-di-ethanolamidethoxilat mit 2 bis 25 angelagerten Ethylenoxideinheiten, und
als Komponente (c) ein Alkylenglykol oder einen aliphatischen ein- oder zweiwertigen C₁-C₆-Alkohol enthalten.

Besonders bevorzugt sind Hilfsmittelzubereitungen welche als Komponente (a) N,N-Dimethyl-N-myristylaminoxid oder N,N-bis-(β-hydroxyäthyl)-N-talgfettaminoxid, als Komponente (b) Fettalkoholglykoläther der Formel

C₁₈H₃₅-O-(CH₂-CH₂-O)₁₀H (4a),

oder
ein Gemisch der Fettalkoholglykoläther der Formeln

C₁₆H₃₃-O-(CH₂-CH₂-O)₈H (4c)

und

C₁₈H₃₇-O-(CH₂-CH₂-O)₈H (4b)

oder ein Kokosfettalkoholglykoläther mit 8 angelagerten Ethylenoxideinheiten oder ein Talgfettalkoholglykoläther mit 8 angelagerten Ethylenoxideinheiten,
und als Komponente (c) ein Alkylenglykol oder einen aliphatischen ein- oder zweiwertigen C₁-C₆-Alkohol enthalten.

Ebenfalls besonders bevorzugt sind Hilfsmittelzubereitungen welche als Komponente (a) N,N-Dimethyl-N-myristylaminoxid oder N,N-bis-(β-hydroxyäthyl)-N-talgfettaminoxid, als Komponente (b) ein Oelsäure-di-ethanolamidethoxilat mit 14 angelagerten Ethylenoxideinheiten oder ein Oelsäure-mono-ethanolamidethoxilat mit 14 angelagerten Ethylenoxideinheiten und
als Komponente (c) ein Alkylenglykol oder einen aliphatischen ein- oder zweiwertigen C₁-C₆-Alkohol enthalten.

Die Verbindungen der Komponente (b) entsprechend Formel (2) sind bekannt und können nach bekannten Verfahren hergestellt werden, indem man z.B. 2 bis 25 Mol Ethylenoxid an aliphatische Alkohole, die einen aliphatischen Rest mit 8 bis 24 Kohlenstoffatomen aufweisen, oder an Fettsäuren, die einen aliphatischen Rest mit
8 bis 24 Kohlenstoffatomen aufweisen, anlagert und gegebenenfalls das Anlagerungsprodukt mit einer den Substituenten W einführenden Verbindung umsetzt.

Die Verbindungen, die als Ausgangsstoffe für die Herstellung der Verbindungen der Formeln (2), (2a), (2b), (3a) bis (3c) und (4a) bis (4c) benötigt werden, können gesättigte oder ungesättigte, verzweigte oder unverzweigte Fettalkohole, Fettsäuren oder Fettsäureamide mit 8 bis 24, vorzugsweise 8 bis 18 Kohlenstoffatomen sein. Sie können chemisch einheitlich sein oder in Form von Gemischen vorliegen. Als Gemische werden vorzugsweise solche herangezogen, wie sie bei der Ueberführung von natürlichen Fetten oder Oelen wie z.B. Talgfett, Soja- oder Kokosöl in die entsprechenden Alkohole oder Fettsäuren entstehen.

Das Gewichtsverhältnis der Komponenten (a) und (b) liegt zwischen 1:10 und 10:1, insbesondere zwischen 2:5 und 5:2, vor allem zwischen 2:3 und 3:2.

Bevorzugt sind Hilfsmittelzubereitungen enthaltend als Komponente (a) die Verbindung der Formel (1) und als Komponente (b) die Verbindung der Formel (2a) im Gewichtsverhältniss zwischen 2:3 und 3:2.

Ebenfalls bevorzugt sind Hilfsmittelzubereitungen enthaltend als Komponente (a) die Verbindung der Formel (1) und als Komponente (b) die Verbindung der Formel (2b) im Gewichtsverhältniss 3:2.

Besonders bevorzugt sind Hilfsmittelzubereitungen enthaltend als Komponente (a) ein N,N-bis-(β-hydroxyäthyl)-N-talgfettaminoxid und als Komponente (b) einen Oleylalkoholethoxilat mit 10 angelagerten Ethylenoxideinheiten im Gewichtsverhältniss von 2:3.

Ebenfalls besonders bevorzugt sind Hilfsmittelzubereitungen enthaltend als Komponente (a) ein N,N-bis-(β-hydroxyäthyl)-N-talgfettaminoxid und als Komponente (b) einen Stearylalkoholethoxilat mit 8 angelagerten Ethylenoxideinheiten im Gewichtsverhältniss von 3:2.

Ferner besonders bevorzugt sind Hilfsmittelzubereitungen enthaltend als Komponente (a) ein N,N-bis-(ß-hydroxyäthyl)-N-talgfettaminoxid und als Komponente (b) ein Oelsäure-mono-ethanolamidethoxilat mit 14 angelagerten Ethylenoxideinheiten im Gewichtsverhältniss von 3:2.

Bei der Herstellung der erfindungsgemässen Hilfsmittelzubereitungen werden die Komponenten (a), (b) und (c) und gegebenenfalls (d) in beliebiger Reihenfolge durch einfaches Verrühren bei Raumtemperatur zusammengemischt. Vorteilhafterweise erfolgt das Zusammenmischen bei einer Temperatur zwischen 20 und 40° C.

Ein weiterer Gegenstand der vorliegenden Erfindung stellt die Verwendung der erfindungsgemässen Hilfsmittelzubereitungen als Hilfsmittel beim Färben von Wolle dar. Die Wolle kann dabei in den verschiedenen Aufmachungen vorliegen. Beispielsweise kommen in Betracht: Flocke, Kammzug, Garn, Gewebe, Maschenware oder Teppiche. Die Wolle kann normal oder filzfrei ausgerüstet sein. Die erfindungsgemässen Hilfsmittelzubereitungen werden vorzugsweise als Egalisiermittel verwendet.

Die Einsatzmengen, in denen die Hilfsmittelzubereitung bestehend aus den Komponenten (a), (b) und (c) dem Färbebad zugesetzt wird, bewegen sich zwischen 0,1 und 10 Gewichtsprozent, bezogen auf das Gewicht des zu färbenden Wollematerials. Vorzugsweise verwendet man 0,2 bis 5 Gewichtsprozent der Hilfsmittelzubereitung, bezogen auf das Gewicht des zu färbenden Wollematerials. Besonders bevorzugt verwendet man 1 bis 3 Gewichtsprozent der Hilfsmittelzubereitung, bezogen auf das Gewicht des zu färbenden Wollematerials.

Die erfindungsgemässen Hilfsmittelzubereitungen zeichnen sich durch einfache Handhabung und problemlose Einarbeitung, wie z.B. durch direkte Zugabe bei mässigem Verrühren, in die Färbebäder aus. Sie können in Form von stabilen Stammlösungen, welche ohne Ausfällungen lange haltbar sind, hergestellt und aufbewährt werden. Die Applikation der erfindungsgemässen Hilfsmittelzubereitung kann vor oder während dem Färben nach einem Ausziehverfahren erfolgen. Die Applikation vor dem Färben ist bevorzugt.

Für das Färben von Wolle mit Hilfe der erfindungsgemässen Zubereitungen können die üblichen für das Färben von Wolle geeigneten Farbstoffe verwendet werden.

Vorzugsweise werden Reaktivfarbstoffe verwendet. Diese Farbstoffklasse wird im Colour Index 3. Auflage 1971 als "Reaktive Dyes" bezeichnet. Es handelt sich dabei vorwiegend um solche Farbstoffe, die mindestens eine mit Polyhydroxylfasern (Cellulosefasern) oder Polyamidfasern, besonders Wolle, reaktionsfähige Gruppe, eine Vorstufe hierfür oder einen mit Polyhydroxylfasern oder Polyamidfasern reaktionsfähigen Substituenten enthalten.

Als Grundkörper der Reaktivfarbstoffe eignen sich besonders solche aus der Reihe der Mono-, Dis- oder Polyazofarbstoffe einschliesslich der Formazanfarbstoffe sowie der Anthrachinon-, Xanthen-, Nitro-, Triphenylmethan-, Naphthochinonimin-, Dioxazin- und Phthalocyaninfarbstoffe, wobei die Azo- und Phthalocyaninfarbstoffe sowohl metallfrei als auch metallhaltig sein können.

Als reaktionsfähige Gruppen und Vorstufen, die solche reaktionsfähige Gruppen bilden, seien beispielsweise Epoxygruppen, die Ethylenimidgruppe, die Vinylgruppierung in Vinylsulfon- oder im Acrylsäurerest sowie die β-Sulfatoethylsulfongruppe, die β-Chlorethylsulfongruppe oder die β-Dialkylaminoethylsulfongruppe genannt.

Als reaktionsfähige Substituenten in Reaktivfarbstoffen dienen solche, die leicht abspaltbar sind und einen elektrophilen Rest hinterlassen.

Als solche Substituenten kommen beispielsweise 1 oder 2 Halogenatome in einem aliphatischen Acylrest z.B. in β-Stellung oder α- und β-Stellung eines Propionylrestes oder in α- und/oder β-Stellung eines Acrylsäurerestes, oder 1 bis 3 Halogenatome an folgenden Ringsystemen in Betracht: Pyridazin, Pyrimidin, Pyridazon, Triazin, Chinoxalin oder Phthalazin.

Es können auch Farbstoffe mit zwei oder mehreren gleich- oder verschiedenartigen Reaktivgruppen verwendet werden.

Bevorzugte Reaktivfarbstoffe enthalten als reaktionsfähige Substituenten Chloracetyl, Bromacryl oder Dibrompropionyl.

Die Reaktivfarbstoffe können saure, salzbildende Substituenten, wie z.B. Carbonsäuregruppen, Schwefelsäure- und Phosphonsäureestergruppen, Phosphonsäuregruppen oder vorzugsweise Sulfonsäuregruppen enthalten.

Bevorzugt sind Reaktivfarbstoffe mit mindestens einer Sulfonsäuregruppe, insbesondere Reaktivfarbstoffe mit einem Azo- oder Anthrachinongrundkörper, welcher vorzugsweise zwei bis drei Sulfonsäuregruppen aufweist.

Es können auch Mischungen von Reaktivfarbstoffen eingesetzt werden, wobei Dichromieoder Trichromiefärbungen erzeugt werden können.

Ebenfalls vorzugsweise werden 1:1 Chromkomplexazofarbstoffe der Formel 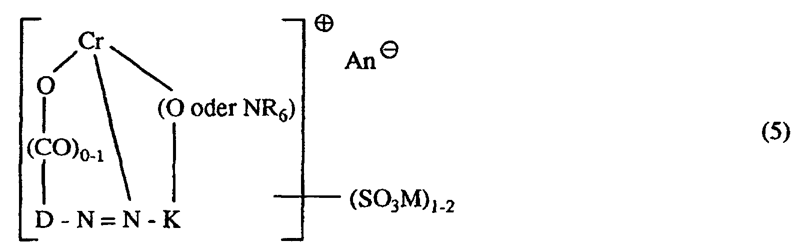 verwendet, worin
-(CO)₀₋₁-O- und (O oder NR₆) in Nachbarstellung zur Azobrücke an D und K gebunden sind, D der Rest einer Diazokomponente der Benzol- oder Naphthalinreihe, K der Rest einer Kupplungskomponente der Benzol-, Naphthalin- oder heterocyclischen Reihe oder der Acetessigsäurearylidreihe, R₆ Wasserstoff, oder ein gegebenenfalls substituierter Alkyl- oder Phenylrest, M Wasserstoff oder ein Alkalikation und An ein Anion sind.

Besonders bevorzugt als 1:1 Chromkomplexazofarbstoffe werden solche der Formel (5) verwendet, worin D ein unsubstituiertes oder durch Halogen, C₁-C₄-Alkyl, C₁-C₄-Alkoxy, Nitro oder Sulfamoyl substituierter Benzol- oder Naphthalinrest, K ein unsubstituierter oder durch Halogen, C₁-C₄-Alkyl, C₁-C₄-Alkoxy, C₂-C₄-Alkanoylamino, Sulfamoyl oder Hydroxy substituierter Phenyl-, Naphthyl-, 1-Phenyl-3-methylpyrazolon-(5)-, Acetoacetamid-, insbesondere Acet-acetoanilid- oder Chinolinrest, R₆ Wasserstoff und M ein Alkalikation sind.

Es können auch Mischungen der 1:1 Chromkomplexazofarbstoffe verwendet werden.

Die verwendeten Farbstoffe sind bekannt und können nach bekannten Methoden hergestellt werden.

Die Färbung erfolgt nach dem Ausziehverfahren. Die Menge der der Färbeflotte zugesetzten Farbstoffe richtet sich nach der gewünschten Farbstärke. Im allgemeinen haben sich Mengen von 0,01 bis 10 Gewichtsprozent, vorzugsweise 0,01 bis 4 Gewichtsprozent, bezogen auf das Gewicht des eingesetzten Fasermaterials, bewährt.

Das Flottenverhältnis kann innerhalb eines weiten Bereiches gewählt werden z.B. 1:3 bis 1:100, vorzugsweise 1:8 bis 1:30.

Die Färbebäder können Mineralsäuren, wie z.B. Schwefelsäure oder Phosphorsäure, organische Säuren, zweckmässig aliphatische Carbonsäuren wie Ameisensäure, Essigsäure, Oxalsäure oder Zitronensäure und/oder Salze wie Ammoniumacetat, Ammoniumsulfat oder Natriumacetat enthalten. Die Säuren dienen vor allem der Einstellung des pH-Wertes der erfindungsgemäss verwendeten Flotten, der zwischen 4 und 5,5 liegt.

Die Färbeflotten können auch weitere Zusätze, wie z.B. Wollschutz-, Dispergier- und Netzmittel sowie auch Entschäumer enthalten.

Das Färbeverfahren kann in den üblichen Färbeapparaturen, wie beispielsweise offene Bäder, Kammzug-, Stranggarn- oder Packapparate, Jigger-, Paddelapparate, Baumfärbeapparate, Zirkulations- oder Düsenfärbeapparate oder Haspelkufen durchgeführt werden.

Das Färben erfolgt mit Vorteil bei einer Temperatur im Bereich von 40 bis 120°C, vorzugsweise 70 bis 105°C. Die Färbedauer hält sich im üblichen Rahmen und beträgt in der Regel 20 bis 120 Minuten.

Nach Beendigung der Färbung kann dem Färbeprozess eine alkalische Nachbehandlung, wie z.B. mit wässerigem Ammoniak, Alkalimetallhydroxiden, Alkalimetallcarbonaten, -hydrogencarbonaten oder Hexamethylentetraamin angeschlossen werden. Der pH-Wert der Alkali enthaltenden Färbebäder beträgt zweckmässigerweise 7,5 bis 9, vorzugsweise 8 bis 8,5.

Das Färben des Fasermaterials wird zweckmässig so durchgeführt, dass man das Färbegut mit einer wässerigen Flotte, welche die erfindungsgemässe Hilfsmittelzubereitung enthaltend die Komponenten (a), (b) und (c) enthält und eine Temperatur von 30 bis 60°C aufweist, kurz behandelt und dem gleichen Bade den Reaktivfarbstoff zusetzt. Hierauf steigert man die Temperatur langsam, um in einem Bereich von 80 bis 100°C und während 20 bis 90 Minuten, vorzugsweise 30 bis 60 Minuten zu färben.
Anschliessend wird das Färbegut bei Bedarf nach Zusatz von Alkalien, vorzugsweise Ammoniak, Natriumhydrogencarbonat oder Natriumcarbonat noch 10 bis 20 Minuten bei 70 bis 90°C entweder im gleichen Färbebed behandelt oder man lässt vorzugsweise das Färbebad ab und führt diese anschliessende Behandlung in einem frischen Bad durch. Am Schluss wird das gefärbte Material herausgezogen und wie üblich gespült, abgesäuert und getrocknet.

Man erhält bei der Verwendung von erfindungsgemässen Hilfsmittelzubereitungen faserund flächenegale Färbungen mit guten Licht- und Nassechtheiten.

Die nachfolgenden Beispiele dienen der Veranschaulichung der Erfindung. Darin sind die Teile Gewichtsteile und Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

### Beispiel 1:

Eine Wollkamgarn-Kreuzspule von 1 200 g und einer Wickeldichte von 350 g/l wird in einem Zirkulationsfärbeapparat ®MTM-Obermeier mit einer Flotte enthaltend
12 g einer Hilfsmittelzubereitung bestehend aus
22 Gewichtsprozent eines N,N-bis-(β-hydroxyäthyl)-N-talgfettaminoxides,
33 Gewichtsprozent eines Fettalkoholglykoläthers der Formel

   C₁₈H₃₅-O-(CH₂-CH₂-O)₁₀H,
20 Gewichtsprozent 2-Methyl-2,4-pentandiols und
25 Gewichtsprozent Wasser,
0,5 g/l eines handelsüblichen Penetrationsbeschleunigers,
48 g Ammoniumsulfat und
60 g Natriumsulfat kalz.
bei einem Flottenverhältnis 1:20 und einer innen/aussen Flottenzirkulation von 36 l/min zuerst 10 Minuten bei 50° C behandelt. Danach werden der Flotte
5,4 g des gelben Farbstoffes der Formel 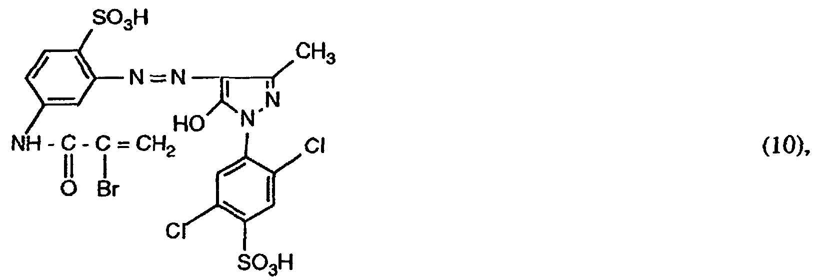 7,2 g des roten Farbstoffes der Formel 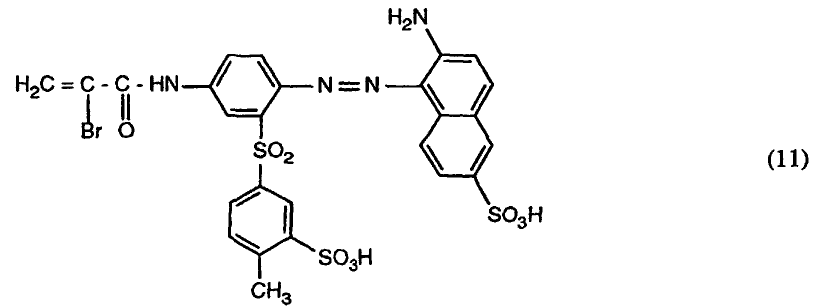 und 5,4 g des blauen Farbstoffes der Formel 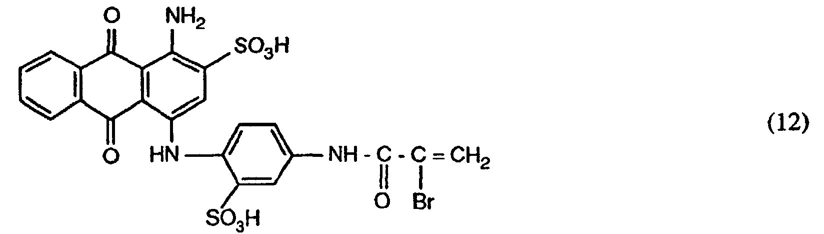 zugegeben.
Nach weiteren 10 Minuten wird der pH-Wert der Flotte mit 80%-iger Essigsäure auf 5,5 gestellt und die Temperatur innerhalb 20 Minuten auf 70° C erhöht. Nach 20 Minuten wird die Temperatur innerhalb 30 Minuten auf 98° C erhöht und während 45 Minuten gehalten. Danach wird die Flotte auf 80° C abgekühlt und abgelassen. Die gefärbte Kreuzspule wird 15 Minuten bei 80° C in einem frischen Bad mit 25 Wasser, das mit Ammoniak auf den pH-Wert von 8,5 eingestellt, weiterbehandelt. Anschliessend wird die Kreuzspule gespült, mit Ameisensäure neutralisiert und getrocknet. Man bekommt eine egale braune Färbung, bei der die Innen- und Aussenseite der Kreuzspule keinen Farbunterschied aufweist.

### Beispiel 2:

In einem ®AHIBA-Färbeapparat wird bei einem Flottenverhältnis von 1:13 ein Muster von 45 g Wollserge mit einer Flotte enthaltend
0,45 g einer Hilfsmittelzubereitung bestehend aus
21 Gewichtsprozent eines N,N-Dimethyl-N-myristylaminoxides,
14 Gewichtsprozent eines C₁₆/C₁₈-Fettalkoholglykoläthers mit 8 angelagerten Ethylenoxideinheiten,
16 Gewichtsprozent 2-Methyl-2,4-pentandiols und
49 Gewichtsprozent Wasser,
0,5 g/l eines handelsüblichen Penetrationsbeschleunigers,
1,8 g Ammoniumsulfat und
2,25 g Natriumsulfat kalz. wie folgt behandelt.
Die Flotte wird auf 50° C erwärmt und das Wollsergemuster 10 Minuten bei dieser Temperatur behandelt. Danach werden der Flotte
0,675 g des roten Farbstoffes der Formel 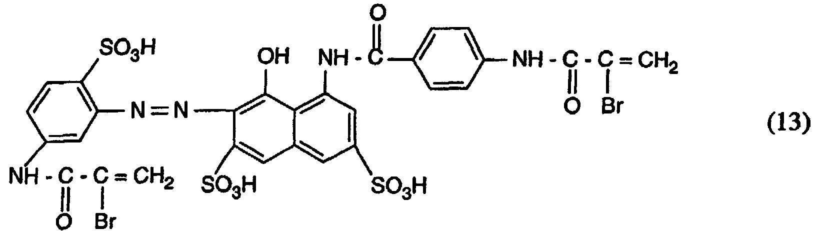 zugegeben. Nach weiteren 10 Minuten wird der pH-Wert mit 80%-iger Essigsäure auf 5,5 gestellt und die Temperatur innerhalb 20 Minuten auf 70° C erhöht. Nach 20 Minuten wird die Temperatur innerhalb 30 Minuten auf 98° C erhöht und während 45 Minuten gehalten. Danach wird die Flotte auf 80° C abgekühlt und abgelassen. Das gefärbte Wollserge-Muster wird 15 Minuten bei 80° C in einem frischen Bad mit 150 ml Wasser, das mit Ammoniak auf den pH-Wert von 8,5 eingestellt, weiterbehandelt. Anschliessend wird das gefärbte Wollserge-Muster gespült, mit Ameisensäure neutralisiert und getrocknet. Man bekommt eine egale rote Färbung.

### Beispiel 3:

Verfährt man wie im Beispiel 2 beschrieben, verwendet aber anstatt 0,45 g einer Hilfsmittelzubereitung bestehend aus
21 Gewichtsprozent eines N,N-Dimethyl-N-myristylaminoxides,
14 Gewichtsprozent eines C₁₆/C₁₈-Fettalkoholglykoläthers mit 8 angelagerten Ethylenoxideinheiten,
16 Gewichtsprozent 2-Methyl-2,4-pentandiols und
49 Gewichtsprozent Wasser
0,45 g einer Hilfsmittelzubereitung bestehend aus
22 Gewichtsprozent eines N,N-bis-(β-hydroxyäthyl)-N-talgfettaminoxides,
33 Gewichtsprozent eines Fettalkoholglykoläthers der Formel

   C₁₈H₃₅-O-(CH₂-CH₂-O)₁₀H,
20 Gewichtsprozent 2-Methyl-2,4-pentandiols und
25 Gewichtsprozent Wasser,
erhält man ebenfalls eine egale rote Färbung.

### Beispiel 4:

Verfährt man wie im Beispiel 2 beschrieben, verwendet aber anstatt 0,45 g einer Hilfsmittelzubereitung bestehend aus
21 Gewichtsprozent eines N,N-Dimethyl-N-myristylaminoxides,
14 Gewichtsprozent eines C₁₆/C₁₈-Fettalkoholglykoläthers mit 8 angelagerten Ethylenoxideinheiten,
16 Gewichtsprozent 2-Methyl-2,4-pentandiols und
49 Gewichtsprozent Wasser
0,45 g einer Hilfsmittelzubereitung bestehend aus
30 Gewichtsprozent eines N,N-bis-(β-hydroxyäthyl)-N-talgfettaminoxides,
20 Gewichtsprozent eines C₁₆/C₁₈-Fettalkoholglykoläthers mit 8 angelagerten Ethylenoxideinheiten,
20 Gewichtsprozent 2-Methyl-2,4-pentandiols und
30 Gewichtsprozent Wasser,
erhält man ebenfalls eine egale rote Färbung.

### Beispiel 5:

Verfährt man wie im Beispiel 2 beschrieben, verwendet aber anstatt 0,45 g einer Hilfsmittelzubereitung bestehend aus
21 Gewichtsprozent eines N,N-Dimethyl-N-myristylaminoxides,
14 Gewichtsprozent eines C₁₆/C₁₈-Fettalkoholglykoläthers mit 8 angelagerten Ethylenoxideinheiten,
16 Gewichtsprozent 2-Methyl-2,4-pentandiols und
49 Gewichtsprozent Wasser
0,45 g einer Hilfsmittelzubereitung bestehend aus
30 Gewichtsprozent eines N,N-bis-(β-hydroxyäthyl)-N-talgfettaminoxides,
20 Gewichtsprozent eines Oelsäure-mono-ethanolamidethoxilat mit 14 angelagerten Ethylenoxideinheiten,
20 Gewichtsprozent 2-Methyl-2,4-pentandiols und
30 Gewichtsprozent Wasser,
erhält man ebenfalls eine egale rote Färbung.

### Beispiel 6:

Verfährt man wie in Beispielen 2 bis 5 beschrieben, verwendet aber anstatt eines Musters von 45 g Wollserge ein gleich schweres Muster von spitzigfärbender Wolle, erhält man ebenfalls egale rote Färbungen.

### Beispiel 7:

In einem ®AHIBA-Färbeapparat wird bei einem Flottenverhältnis von 1:13 ein Muster von 45 g Wollserge mit einer Flotte enthaltend
0,8 g einer Hilfsmittelzubereitung bestehend aus
   22 Gewichtsprozent eines N,N-bis-(β-hydroxyäthyl)-N-talgfettaminoxides,
   33 Gewichtsprozent eines Fettalkoholglykoläthers der Formel

      C₁₈H₃₅-O-(CH₂-CH₂-O)₁₀H,
   20 Gewichtsprozent 2-Methyl-2,4-pentandiols und
   25 Gewichtsprozent Wasser,
   0,5 g/l eines handelsüblichen Penetrationsbeschleunigers,
   20 ml Ameisensäure 85%-ig,
   3,6 g Natriumsulfat kalz.,
   0,07 g Hexafluorosilikat,
   0.04 g des Farbstoffes der Formel 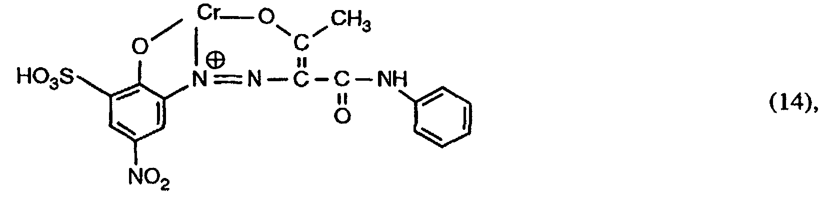 0,08 g des Farbstoffes der Formel 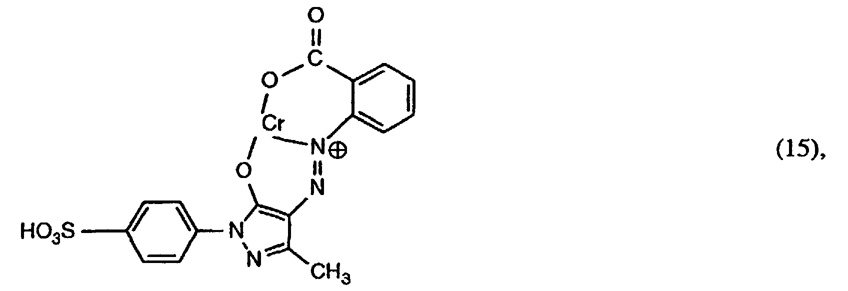 0,04 g des Farbstoffes der Formel 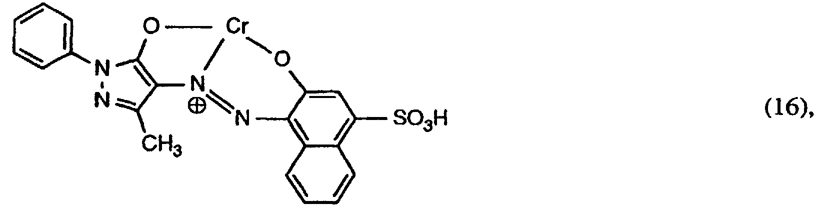 0,14 g des Farbstoffes der Formel 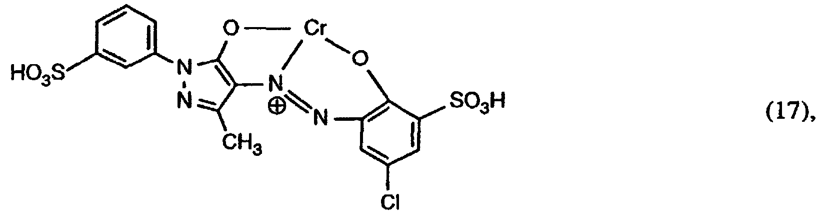 0,24 g des Farbstoffes der Formel 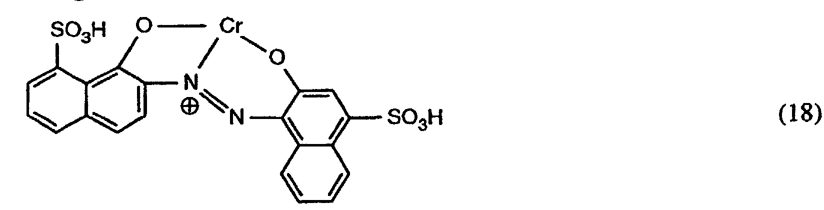 und 0,26 g des Farbstoffes der Formel 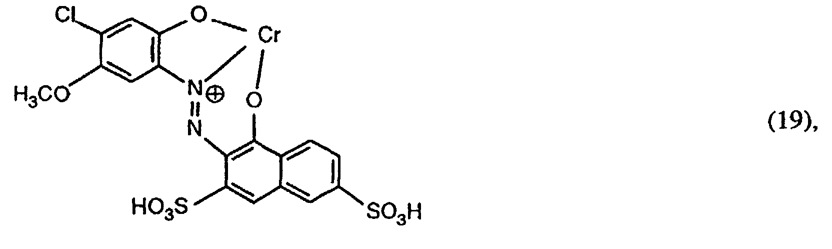 wie folgt behandelt.
   Die Flotte wird auf 40° C aufgeheizt, das Wollsergemuster zugegeben und 20 Minuten bei dieser Temperatur behandelt. Anschliessend wird die Temperatur des Färbebades innerhalb 60 Minuten auf 98° C erhöht und während 90 Minuten bei dieser Temperatur gehalten. Danach wird das Färbebad auf 80° C abgekühlt, das Wollsergemuster herausgenommen und mit fliessendem, 40° C warmem, Wasser gespült und getrocknet. Man erhält eine egale dunkelgraue Färbung.

## Patentansprüche

1. Verwendung einer Hilfsmittelzabereitung enthaltend
als Komponente (a) mindestens ein Aminoxid der Formel 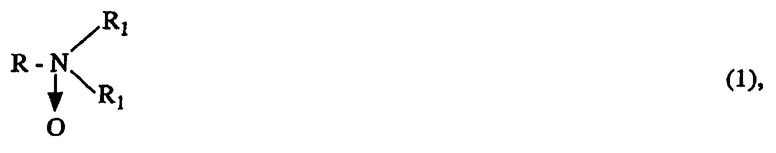 worin
R einen aliphatischen Rest mit 8 bis 24 Kohlenstoffatomen und R₁ einen unsubstituierten oder durch Hydroxy substituierten aliphatischen Rest mit 1 bis 24 Kohlenstoffatomen, bevorzugt 1 bis 6 Kohlenstoffatomen, bedeuten,
als Komponente (b) mindestens eine Verbindung der Formel
R₂-U-(R₃-O)ₘ-W (2),
worin
R₂ ein aliphatischer Rest von 8 bis 24 Kohlenstoffatomen,
R₃ Alkylen mit 2 bis 4 Kohlenstoffatomen, U -O- oder 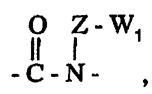 worin Z eine direkte Bindung, (R₃-O)ᵣ oder C₁-C₆-Alkylen und W₁ Wasserstoff, unsubstituiertes oder mit Hydroxy, Carboxy, Isocyanato, Phenyl, Benzyloxymethylen oder Phenethyloxymethylen substituiertes C₁-C₆-Alkyl ist,
m und r voneinander unabhängig eine Zahl von 2 bis 25 ist, (R₃- O)ₘ für m gleiche oder verschiedene Reste (R₃- O) und (R₃- O)ᵣ für r gleiche oder verschiedene Reste (R₃- O) steht, und W Wasserstoff, unsubstituiertes oder mit Hydroxy, Carboxy, Isocyanato, Phenyl, Benzyloxymethylen oder Phenethyloxymethylen substituiertes C₁-C₆-Alkyl ist, und als Komponente (c) 10-30 Gewichtsteile, berechnet auf 100 Gewichtsteile der fertigen Zubereitung, eines organisches Lösungsmittels aus der Gruppe einwertige und zweiwertige aliphatische C₁-C₆-Alkohole, Alkylenglykole, Monoalkyläther von Glykolen, Ketone,
Aether und Acetate, Tetrahydrofurfurylalkohol, Pyridin, Acetonitril, γ-Butyrolacton, N,N-Dimethylformamid, N,N-Dimethylacetamid, Tetramethylharnstoff, Tetramethylensulfon, 2,2,4-Trimethyl-1,3-pentandiol-di-isobutyrat und Dimethylmethanphosphonat, als Hilfsmittel beim Färben von Wolle.

2. Verwendung gemäss Anspruch 1, **dadurch gekennzeichnet, dass** man als Komponente (a) in der Hilfsmittelzubereitung N,N-Dimethyl-N-dodecylaminoxid, N,N-Dimethyl-N-hexadecylaminoxid, N,N-Dimethyl-N-octadecenylaminoxid, N,N-Dibutyl-N-dodecylaminoxid, N,N-bis-(β-hydroxyäthyl)-N-stearylaminoxid, N,N-Dimethyl-N-oleylaminoxid, N,N-Dimethyl-N-myristylaminoxid, N,N-Dimethyl-N-laurylaminoxid, N,N-bis-(β-hydroxyäthyl)-N-talgfettaminoxid, N,N-bis-(β-hydroxyäthyl)-N-kokosfettaminoxid oder N,N-bis-(β-hydroxyäthyl)-N-oleylaminoxid verwendet.

3. Verwendung gemäss einem der Ansprüche 1 oder 2, **dadurch gekennzeichnet, dass** man als Komponente (b) in der Hilfsmittelzubereitung ein Fettalkoholglykoläther der Formel
R₄-O-(R₃-O)ₘ-W (2a),
worin R₄ ein aliphatischer Rest von 8 bis 24 Kohlenstoffatomen, insbesondere 8 bis 18 Kohlenstoffatomen,
R₃ Alkylen mit 2 bis 4 Kohlenstoffatomen, W Wasserstoff, unsubstituiertes oder mit Hydroxy, Carboxy, Isocyanato, Phenyl, Benzyloxymethylen oder Phenethyloxymethylen substituiertes C₁-C₆-Alkyl ist, m eine Zahl von 2 bis 25 ist und (R₃- O)ₘ für m gleiche oder verschiedene Reste (R₃- O) steht, verwendet.

4. Verwendung gemäss einem der Ansprüche 1 oder 2, **dadurch gekennzeichnet, dass** man als Komponente (b) in der Hilfsmittelzubereitung ein Fettsäureamidglykoläther der Formel 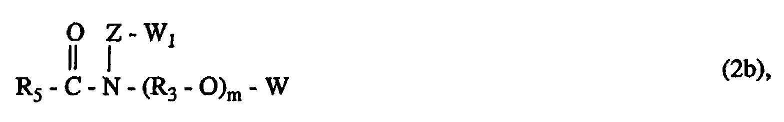 worin R₅ ein aliphatischer Rest von 8 bis 24 Kohlenstoffatomen, insbesondere 8 bis 18 Kohlenstoffatomen,
R₃ Alkylen mit 2 bis 4 Kohlenstoffatomen, W und W₁ unabhängig voneinander Wasserstoff, unsubstituiertes oder mit Hydroxy, Carboxy, Isocyanato, Phenyl, Benzyloxymethylen oder Phenethyloxymethylen substituiertes C₁-C₆-Alkyl ist, Z eine direkte Bindung, (R₃-O)ᵣ oder C₁-C₆-Alkylen,
m und r voneinander unabhängig eine Zahl von 2 bis 25 ist, (R₃- O)ₘ für m gleiche oder verschiedene Reste (R₃- O) und (R₃- O)ᵣ für r gleiche oder verschiedene Reste (R₃- O) steht, verwendet.

5. Verwendung gemäss einem der Ansprüche 1 bis 4, **dadurch gekennzeichnet, dass** man als Komponente (c) in der Hilfsmittelzubereitung Methanol, Ethanol, Propanol, Isopropanol, Butanol, Isobutanol, 1,3-Butandiol, 1,2-Pentandiol, 2-Methyl-2,4-pentandiol, Ethylenglykol, Propylenglykol, Dipropylenglykol, Ethylenglykolmonomethyläther, Ethylenglykolmonoethyläther, Ethylenglykolmonobutyläther, Diethylenglykolmonomethyläther, Diethylenglykolmonoethyläther, Diethylenglykolmonobutyläther, Tetraethylenglykolmonobutyläther, γ-Butyrolacton oder Tetramethylharnstoff verwendet.

6. Verwendung gemäss einem der Ansprüche 1 bis 5, **dadurch gekennzeichnet, dass** man als Komponente (d) in der Hilfsmittelzubereitung Wasser verwendet.

7. Verwendung gemäss Anspruch 1, **dadurch gekennzeichnet, dass** man in der Hilfsmittelzubereitung als Komponente (a) N,N-bis-(β-hydroxyäthyl)-N-oleylaminoxid, N,N-Dimethyl-N-myristylaminoxid, N,N-Dimethyl-N-laurylaminoxid,
N,N-bis-(β-hydroxyäthyl)-N-talgfettaminoxid und N,N-bis-(β-hydroxyäthyl)-N-kokosfettaminoxid,
als Komponente (b) ein Fettalkoholglykoläther der Formel
C₁₈H₃₅-O-(CH₂-CH₂-O)₂₋₂₅H (3a),
C₁₈H₃₇-O-(CH₂-CH₂-O)₂₋₂₅H (3b)
oder ein Gemisch der Fettalkoholglykoläther der Formeln
C₁₆H₃₃-O-(CH₂-CH₂-O)₂₋₂₅H (3c)
und
C₁₈H₃₇-O-(CH₂-CH₂-O)₂₋₂₅H (3b)
oder ein Kokosfettalkoholglykoläther mit 2 bis 25 angelagerten Ethylenoxideinheiten oder ein Talgfettalkoholglykoläther mit 2 bis 25 angelagerten Ethylenoxideinheiten, und als Komponente (c) ein Alkylenglykol oder einen aliphatischen ein- oder zweiwertigen C₁-C₆-Alkohol enthält.

8. Verwendung gemäss Anspruch 1, **dadurch gekennzeichnet, dass** man in der Hilfsmittelzubereitung als Komponente (a) N,N-bis-(β-hydroxyäthyl)-N-oleylaminoxid, N,N-Dimethyl-N-myristylaminoxid, N,N-Dimethyl-N-laurylaminoxid,
N,N-bis-(β-hydroxyäthyl)-N-talgfettaminoxid und N,N-bis-(β-hydroxyäthyl)-N-kokosfettaminoxid,
als Komponente (b) Kokosfettsäure-mono-ethanolamidethoxilat mit 2 bis 25 angelagerten Ethylenoxideinheiten, Kokosfettsäure-di-ethanolamidethoxilat mit 2 bis 25 angelagerten Ethylenoxideinheiten, Talgfettsäure-mono-ethanolamidethoxilat mit 2 bis 25 angelagerten Ethylenoxideinheiten, Talgfettsäure-di-ethanolamidethoxilat mit 2 bis 25 angelagerten Ethylenoxideinheiten, Oelsäure-mono-ethanolamidethoxilat mit 2 bis 25 angelagerten Ethylenoxideinheiten oder Oelsäure-di-ethanolamidethoxilat mit 2 bis 25 angelagerten Ethylenoxideinheiten, und
als Komponente (c) ein Alkylenglykol oder einen aliphatischen ein- oder zweiwertigen C₁-C₆-Alkohol verwendet.

9. Verwendung gemäss einem der Ansprüche 1 bis 8, **dadurch gekennzeichnet, dass** das Gewichtsverhältnis der Komponenten (a) und (b) in der Hilfsmittelzubereitung zwischen 1:10 und 10:1, vorzugsweise zwischen 2:5 und 5:2 liegt.

10. Verwendung gemäss Anspruch 3, **dadurch gekennzeichnet, dass** man in der Hilfsmittelzubereitung als Komponente (a) die Verbindung der Formel (1) und als Komponente (b) die Verbindung der Formel (2a) im Gewichtsverhältniss 2:3 bis 3:2 verwendet.

11. Verwendung gemäss Anspruch 4, **dadurch gekennzeichnet, dass** man in der Hilfsmittelzubereitung als Komponente (a) die Verbindung der Formel (1) und als Komponente (b) die Verbindung der Formel (2b) im Gewichtsverhältniss 3:2 verwendet.

12. Verwendung der Hilfsmittelzubereitung gemäss einem der Ansprüche 1 bis 11 als Egalisiermittel beim Färben von Wolle.

13. Verwendung gemäss einem der Ansprüche 1 bis 12, **dadurch gekennzeichnet, dass** man die Hilfsmittelzubereitungen beim Färben von Wolle mit Reaktiv- oder 1:1 Chromkomplexazofarbstoffen verwendet.

14. Verwendung gemäss einem der Ansprüche 1 bis 13, **dadurch gekennzeichnet, dass** man 0,1 bis 10 Gewichtsprozent der Hilfsmittelzubereitung, bezogen auf das Gewicht des zu färbenden Wollematerials, verwendet.

## Claims

1. The use of an assistant preparation comprising,
as component (a), at least one amine oxide of the formula 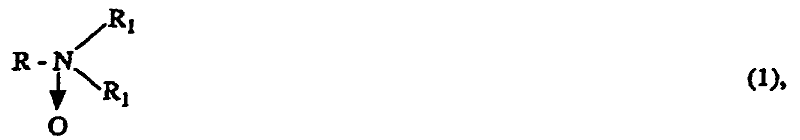 in which
R is an aliphatic radical having 8 to 24 carbon atoms and R₁ is an aliphatic radical which is unsubstituted or substituted by hydroxyl and has 1 to 24 carbon atoms, preferably 1 to 6 carbon atoms,
as component (b), at least one compound of the formula
R₂-U-(R₃-O)ₘ-W (2),
in which
R₂ is an aliphatic radical having from 8 to 24 carbon atoms,
R₃ is alkylene having 2 to 4 carbon atoms,
U is -O- or 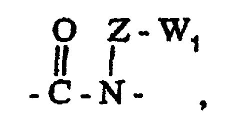 in which Z is a direct bond, (R₃-O)ᵣ or C₁-C₆alkylene and W₁ is hydrogen or C₁-C₆alkyl which is unsubstituted or substituted by hydroxyl, carboxyl, isocyanato, phenyl, benzyloxymethylene or phenethyloxymethylene,
m and r independently of one another are a number from 2 to 25,
(R₃-O)ₘ is m identical or different radicals (R₃-O) and (R₃-O)ᵣ is r identical or different radicals (R₃-O), and W is hydrogen or C₁-C₆alkyl which is unsubstituted or substituted by hydroxyl, carboxyl, isocyanato, phenyl, benzyloxymethylene or phenethyloxymethylene,
and, as component (c), an organic solvent selected from the group consisting of monohydric and dihydric aliphatic C₁-C₆ alcohols, alkylene glycols, monoalkyl ethers of glycols, ketones, ethers and acetates, tetrahydrofurfuryl alcohol, pyridine, acetonitrile, γ-butyrolactone, N,N-dimethylformamide, N,N-dimethylacetamide, tetramethylurea, tetramethylene sulfone, 2,2,4-trimethyl-1,3-pentanediol diisobutyrate and dimethyl methanephosphonate, as wool dyeing assistant.

2. The use according to claim 1, wherein, as component (a) in the assistant preparation, N,N-dimethyl-N-dodecylamine oxide, N,N-dimethyl-N-hexadecylamine oxide, N,N-dimethyl-N-octadecenylamine oxide, N,N-dibutyl-N-dodecylamine oxide, N,N-bis(β-hydroxyethyl)-N-stearylamine oxide, N,N-dimethyl-N-oleylamine oxide, N,N-dimethyl-N-myristylamine oxide, N,N-dimethyl-N-laurylamine oxide,
N,N-bis(β-hydroxyethyl)-N-tallow-fatty amine oxide,
N,N-bis(β-hydroxyethyl)-N-coconut-fatty amine oxide or
N,N-bis(β-hydroxyethyl)-N-oleylamine oxide is used.

3. The use according to one of claims 1 and 2, wherein, as component (b) in the assistant preparation, a fatty alcohol glycol ether of the formula
R₄-O-(R₃-O)ₘ-W (2a),
in which R₄ is an aliphatic radical of 8 to 24 carbon atoms, in particular 8 to 18 carbon atoms,
R₃ is alkylene having 2 to 4 carbon atoms,
W is hydrogen or C₁-C₆alkyl which is unsubstituted or substituted by hydroxyl, carboxyl, isocyanato, phenyl, benzyloxymethylene or phenethyloxymethylene,
m is a number from 2 to 25 and
(R₃-O)ₘ is m identical or different radicals (R₃-O) is used.

4. The use according to one of claims 1 and 2, wherein, as component (b) in the assistant preparation, a fatty acid amide glycol ether of the formula 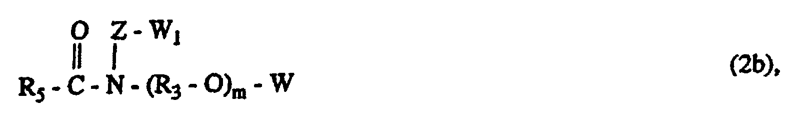 in which
R₅ is an aliphatic radical of 8 to 24 carbon atoms, in particular 8 to 18 carbon atoms,
R₃ is alkylene having 2 to 4 carbon atoms,
W and W₁ independently of one another are hydrogen or C₁-C₆alkyl which is unsubstituted or substituted by hydroxyl, carboxyl, isocyanato, phenyl, benzyloxymethylene or phenethyloxymethylene,
Z is a direct bond, (R₃-O)ᵣ or C₁-C₆alkylene,
m and r independently of one another are a number from 2 to 25,
(R₃-O)ₘ is m identical or different radicals (R₃-O) and
(R₃-O)ᵣ is r identical or different radicals (R₃-O) is used.

5. The use according to any one of claims 1 to 4, wherein, as component (c) in the assistant preparation, methanol, ethanol, propanol, isopropanol, butanol, isobutanol, 1,3-butanediol, 1,2-pentanediol, 2-methyl-2,4-pentanediol, ethylene glycol, propylene glycol, dipropylene glycol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, tetraethylene glycol monobutyl ether, γ-butyrolactone or tetramethylurea is used.

6. The use according to any one of claims 1 to 5, wherein water is used as component (d) in the assistant preparation.

7. The use according to claim 1, wherein, as component (a) in the assistant preparation , N,N-bis(β-hydroxyethyl)-N-oleylamine oxide, N,N-dimethyl-N-myristylamine oxide, N,N-dimethyl-N-laurylamine oxide, N,N-bis(β-hydroxyethyl)-N-tallow-fatty amine oxide and N,N-bis(β-hydroxyethyl)-N-coconut-fatty amine oxide,
as component (b), a fatty alcohol glycol ether of the formula
C₁₈H₃₅-O- (CH₂-CH₂-O)₂₋₂₅H (3a),
C₁₈H₃₇-O- (CH₂-CH₂-O)₂₋₂₅H (3b)
or a mixture of the fatty alcohol glycol ethers of the formulae
C₁₆H₃₃-O- (CH₂-CH₂-O)₂₋₂₅H (3c)
and
C₁₈H₃₇-O- (CH₂-CH₂-O)₂₋₂₅H (3b)
or a coconut-fatty alcohol glycol ether having 2 to 25 added-on ethylene oxide units or a tallow-fatty alcohol glycol ether having 2 to 25 added-on ethylene oxide units,
and as component (c), an alkylene glycol or an aliphatic mono- or dihydric C₁-C₆ alcohol are used.

8. The use according to claim 1, wherein, in the assistant preparation, as component (a), N,N-bis(β-hydroxyethyl)-N-oleylamine oxide, N,N-dimethyl-N-myristylamine oxide, N,N-dimethyl-N-laurylamine oxide, N,N-bis(β-hydroxyethyl)-N-tallow-fatty amine oxide and N,N-bis(β-hydroxyethyl)-N-coconut-fatty amine oxide,
as component (b), coconut-fatty acid monoethanolamide ethoxylate having 2 to 25 added-on ethylene oxide units, coconut-fatty acid diethanolamide ethoxylate having 2 to 25 added-on ethylene oxide units, tallow-fatty acid monoethanolamiole ethoxylate having 2 to 25 added-on ethylene oxide units, tallow-fatty acid diethanolamide ethoxylate having 2 to 25 added-on ethylene oxide units, oleic acid monoethanolamide ethoxylate having 2 to 25 added-on ethylene oxide units or oleic acid diethanolamide ethoxylate having 2 to 25 added-on ethylene oxide units, and,
as component (c), an alkylene glycol or an aliphatic mono- or dihydric C₁-C₆ alcohol are used.

9. The use according to any of claims 1 to 8, wherein the weight ratio of components (a) and (b) in the assistant preparation is between 1:10 and 10:1, preferably between 2:5 and 5:2.

10. The use according to claim 3, wherein the compound of the formula (1) as component (a) and the compound of the formula (2a) as component (b) in a weight ratio of 2:3 to 3:2 are used in the assistant preparation.

11. The use according to claim 4, wherein the compound of the formula (1) as component (a) and the compound of the formula (2b) as component (b) in a weight ratio of 3:2 are used in the assistant preparation.

12. The use of the dyeing assistant preparation according to any of claims 1 to 11 as a levelling agent in dyeing wool.

13. The use according to any of claims 1 to 12, wherein the assistant preparation is used in dyeing wool with reactive or 1:1 chromium complex azo dyes.

14. The use according to any of claims 1 to 13, wherein 0.1 to 10 per cent by weight of the assistant preparation, based on the weight of the wool material to be dyed, is used.

## Revendications

1. Utilisation d'une préparation d'agents auxiliaires comprenant
en tant que composant (a) au moins un aminoxyde de formule 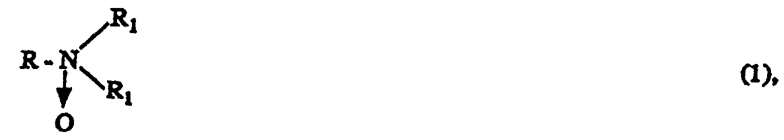 où
R représente un reste aliphatique présentant 8 à 24 atomes de carbone et
R₁ représente un reste aliphatique présentant 1 à 24 atomes de carbone, de préférence 1 à 6 atomes de carbone, non substitué ou substitué par un substituant hydroxy,
en tant que composant (b), au moins un composé de formule
R₂-U-(R₃-O)ₘ-W (2)
où
R₂ représente un reste aliphatique présentant de 8 à 24 atomes de carbone,
R₃ représente un groupe alkylène présentant 2 à 24 atomes de carbone
U représente des groupes -O- ou 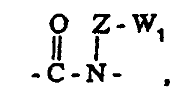 où Z représente une liaison directe, des groupes (R₃-O)ᵣ ou alkylène en C₁-C₆ et W₁ représente un atome d'hydrogène, un groupe alkyle en C₁-C₆ non substitué ou substitué par des substituants hydroxy, carboxy, isocyanato, phényle, benzyloxyméthylène ou phénéthyloxyméthylène, m et r vont, indépendamment l'un de l'autre, de 2 à 25, (R₃-O)ₘ représente m restes (R₃-O) identiques ou différents et (R₃-O)ᵣ représente r restes (R₃-O) identiques ou différents, et W représente un atome d'hydrogéne, un groupe alkyle en C₁-C₆ non substitué ou substitué par des substituants hydroxy, carboxy, isocyanato, phényle, benzyloxyméthylène ou phénéthyloxyméthylène,
et en tant que composant (c) de 10 à 30 parties en poids, par rapport à 100 parties en poids de la préparation finie, un solvant organique pris dans le groupe comprenant des alcools en C₁-C₆ aliphatiques monofonctionnels et bifonctionnels, des alkylène-glycols, des éthers monoalkyliques de glycols, des cétones, des éthers et des acétates, l'alcool tétrahydrofurfurylique, la pyridine, l'acétonitrile, la γ-butyrolactone, le N,N-diméthylformamide, le N,N-diméthylacétamide, la tétraméthylurée, la tétraméthylsulfone, le di-isobutyrate de 2,2,4-triméthyl-1,3-pentanediol et le phosphonate de diméthylméthane, en tant qu'adjuvant pour la teinture de la laine.

2. Utilisation selon la revendication 1, **caractérisée en ce qu'**on utilise comme composant (a) dans la préparation d'agents auxiliaires le N,N-diméthyl-N-dodécylaminoxyde, le N,N-diméthyl-N-hexadécylaminoxyde, le N,N-diméthyl-N-octadécénylaminoxyde, le N,N-dibutyl-N-dodécylaminoxyde, le N,N-bis-(β-hydroxyéthyl)-N-stéarylaminoxyde, le N,N-diméthyl-N-oléylaminoxyde, le N,N-diméthyl-N-myristylaminoxyde, le N,N-diméthyl-N-laurylaminoxyde, le N,N-bis-(β-hydroxyéthyl)-N-(aminoxyde de suif), le N,N-bis-(β-hydroxyéthyl)-N-cocosaminoxyde ou le N,N-bis-(β-hydroxyéthyl)-N-oléylaminoxyde.

3. Utilisation selon l'une des revendications 1 ou 2, **caractérisée en ce qu'**on utilise comme composant (b) dans la préparation d'agents auxiliaires un éther de glycol et d'alcool gras de formule
R₄-O-(R₃-O)ₘ-W (2a)
où
R₄ représente un reste aliphatique présentant 8 à 24 atomes de carbone, en particulier de 8 à 18 atomes de carbone,
R₃ représente un groupe alkylène présentant 2 à 4 atomes de carbone,
W représente un atome d'hydrogène, un groupe alkyle en C₁-C₆ non substitué ou substitué par des substituants hydroxy, carboxy, isocyanato, phényle, benzyloxyméthylène ou phénéthyloxyméthylène,
m va de 2 à 25 et
(R₃-O)ₘ représente m restes (R₃-O) identiques ou différents.

4. Utilisation selon l'une des revendications 1 ou 2, **caractérisée en ce qu'**on utilise comme composant (b) dans la préparation d'agents auxiliaires un éther de glycol et d'amide d'acide gras de formule 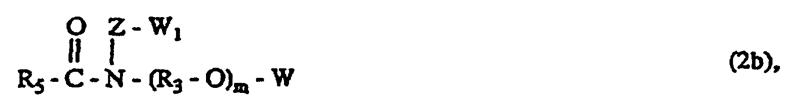 où
R₅ représente un reste aliphatique présentant 8 à 24 atomes de carbone, en particulier 8 à 18 atomes de carbone,
R₃ représente un groupe alkylène présentant 2 à 4 atomes de carbone,
W et W₁ représentent, indépendamment l'un de l'autre, un atome d'hydrogène, un groupe alkyle en C₁-C₆ non substitué ou substitué par des substituants hydroxy, carboxy, isocyanato, phényle, benzyloxyméthylène ou phénéthyloxyméthylène,
Z représente une liaison directe, un groupe (R₃-O)ᵣ ou alkylène en C₁-C₆,
m et r vont, indépendamment l'un de l'autre, de 2 à 25,
(R₃-O)ₘ représente m restes (R₃-O) identiques ou différents et (R₃-O)ᵣ représente r restes (R₃-O) identiques ou différents.

5. Utilisation selon l'une des revendications 1 à 4, **caractérisée en ce qu'**on utilise comme composant (c) dans la préparation d'agents auxiliaires le méthanol, l'éthanol, le propanol, l'isopropanol, le butanol, l'isobutanol, le 1,3-butanediol, le 1,2-pentanediol, le 2-méthyl-2,4-pentanediol, l'éthylèneglycol, le propylèneglycol, le dipropylèneglycol, l'éther monométhylique d'éthylèneglycol, l'éther monoéthylique d'éthylèneglycol, l'éther monobutylique d'éthylèneglycol, l'éther monométhylique de diéthylèneglycol, l'éther monoéthylique de diéthylèneglycol, l'éther mono-butylique de diéthylèneglycol, l'éther mono-butylique de tétraéthylèneglycol, la γ-butyrolactone ou la tétraméthylurée.

6. Utilisation selon l'une des revendications 1 à 5, **caractérisée en ce qu'**on utilise l'eau comme composant (d) dans la préparation d'agents auxiliaires.

7. Utilisation selon la revendication 1, **caractérisée en ce qu'**on utilise dans la préparation d'agents auxiliaires
en tant que composant (a)
le N,N-bis-(β-hydroxyéthyl)-N-oléylaminoxyde, le N,N-diméthyl-N-myristylaminoxyde, le N,N-diméthyl-N-laurylaminoxyde, le N,N-bis-(β-hydroxyéthyl)-N-(aminoxyde de suif) et le N,N-bis-(β-hydroxyéthyl)-N-cocosaminoxyde,
en tant que composant (b) un éther de glycol et d'alcool gras de formule
C₁₈H₃₅-O-(CH₂-CH₂-O)₂₋₂₅H (3a)
C₁₈H₃₇-O-(CH₂-CH₂-O)₂₋₂₅H (3b)
ou
un mélange d'un éther de glycol et d'alcool gras de formule
C₁₆H₃₃-O-(CH₂-CH₂-O)₂₋₂₅H (3c)
et
C₁₈H₃₇-O-(CH₂-CH₂-O)₂₋₂₅H (3b)
ou
un éther de glycol et de cocosalcool avec 2 à 25 unités d'oxyde d'éthylène fixées par addition ou un éther de glycol et d'alcool de suif avec 2 à 25 unités d'oxyde d'éthylène fixées par addition, et en tant que composant (c) un alkylèneglycol ou un alcool en C₁-C₆ aliphatique mono- ou bifonctionnel.

8. Utilisation selon la revendication 1, **caractérisée en ce qu'**on utilise dans la préparation d'agents auxiliaires
en tant que composant (a) le N,N-bis-(β-hydroxyéthyl)-N-oléylaminoxyde, le N,N-diméthyl-N-myristylaminoxyde, le N,N-diméthyl-N-laurylaminoxyde, le N,N-bis-(β-hydroxyéthyl)-N-(aminoxyde de suif) et le N,N-bis-(β-hydroxyéthyl)-N-cocosaminoxyde,
en tant que composant (b) le mono-éthanolamidéthoxylate d'acide de coco avec 2 à 25 unités d'oxyde d'éthylène fixées par addition, le di-éthanolamidéthoxylate d'acide de coco avec 2 à 25 unités d'oxyde d'éthylène fixées par addition, le mono-éthanolamidéthoxylate d'acide de suif avec 2 à 25 unités d'oxyde d'éthylène fixées par addition, le di-éthanolamidéthoxylate d'acide de suif avec 2 à 25 unités d'oxyde d'éthylène fixées par addition, le mono-éthanolamidéthoxylate d'acide oléique avec 2 à 25 unités d'oxyde d'éthylène fixées par addition ou le di-éthanolamidéthoxylate d'acide oléique avec 2 à 25 unités d'oxyde d'éthylène fixées par addition, et
en tant que composant (c), un alkylèneglycol ou un alcool aliphatique en C₁-C₆ mono- ou bifonctionnel.

9. Utilisation selon l'une des revendications 1 à 8, **caractérisée en ce que** le rapport en poids des composants (a) et (b) est compris entre 1:10 et 10:1, en particulier entre 2:5 et 5:2.

10. Utilisation selon la revendication 3, **caractérisée en ce qu'**on utilise dans la préparation d'agents auxiliaires en tant que composant (a) le composé de formule (1) et en tant que composant (b) le composé de formule (2a) dans un rapport en poids de 2:3 à 3:2.

11. Utilisation selon la revendication 4, **caractérisée en ce qu'**on utilise dans la préparation d'agents auxiliaires en tant que composant (a) le composé de formule (1) et en tant que composant (b) le composé de formule (2b) dans un rapport en poids de 3:2.

12. Utilisation de la préparation d'adjuvant selon l'une des revendications 1 à 11 en tant qu'agent égalisant dans la teinture de la lame.

13. Utilisation selon l'une des revendications 1 à 12, **caractérisée en ce qu'**on utilise les préparations d'agents auxiliaires dans la teinture de la laine par des colorants réactifs ou colorants azoïques à complexe de chrome 1:1.

14. Utilisation selon l'une des revendications 1 à 13, **caractérisée en ce qu'**on utilise de 0,1 à 10 % en poids de la préparation d'agents auxiliaires par rapport au poids de la matière à teindre.
